# EUROPÄISCHE PATENTSCHRIFT

(11) **EP 4 555 261 B1**
(45) Veröffentlichungstag und Bekanntmachung des Hinweises auf die Patenterteilung: **11.11.2026**
(21) Anmeldenummer: 23761865.7
(22) Anmeldetag: 24.08.2023
(51) Int. Cl.: F24D 11/02, C25B 1/04, F24D 10/00, C25B 15/021

(54) **VERFAHREN UND VORRICHTUNG ZUR INTEGRATION VON WÄRME IN EIN FERNWÄRMENETZ**
METHOD AND DEVICE FOR INTEGRATING HEAT INTO A DISTRICT HEATING NETWORK
PROCÉDÉ ET DISPOSITIF D'INTÉGRATION DE CHALEUR DANS UN RÉSEAU DE CHAUFFAGE URBAIN

(30) Priorität: 15.09.2022 DE 102022209704
(43) Veröffentlichungstag der Anmeldung: 21.05.2025
(73) Patentinhaber: Siemens Energy Global GmbH & Co. KG, 81739 München (DE)
(72) Erfinder: JAMBOR, Torsten, 40625 Düsseldorf (DE); NEUENHAHN, Thomas, 40215 Düsseldorf (DE); HÜTTL, Christian, 91301 Forchheim (DE)
(86) Internationale Anmeldenummer: PCT/EP2023/073280
(87) Internationale Veröffentlichungsnummer: WO 2024/056343

(56) Entgegenhaltungen:
- EP-A1- 4 001 379
- DE-A1- 102015 209 875
- DE-A1- 102019 202 439
- DE-U1- 202017 006 617

## Beschreibung

Die Erfindung betrifft eine Vorrichtung nach dem Oberbegriff des Patentanspruchs 1 und ein Verfahren gemäß dem Oberbegriff des Patentanspruchs 5.

Die Erfindung befasst sich mit der Herstellung von Wasserstoff und dem schlechten Wirkungsgrad der Wasserstoffelektrolyse und die dadurch entstehende Wärme.

Es ist zu erwarten, dass die CO₂-neutrale und zeitgenaue Versorgung von Wärmenetzen wie Fernwärme und industriellen Prozessen zunehmend auf Wärmepumpen basieren wird. Um einen hohen Wirkungsgrad COP (Coefficient of Performance) zu erzielen, benötigen Wärmepumpen eine Abwärmequelle mit konstantem Wärmestrom als Eingangswärmestrom.

Als Eingangswärmestrom kann die Abwärme genutzt werden, die bei der Wasserstoffproduktion anfällt. Typischerweise erfolgt die Erzeugung von Wasserstoff mittels einer Elektrolyse, beispielsweise mittels einer Protonenaustauschelektrolyse oder einer Membranelektrolyse. Die Elektrolyse erfolgt hierbei bei Temperaturen im Bereich von 30 Grad Celsius bis 80 Grad Celsius, wobei etwa 50 Prozent bis 80 Prozent der eingesetzten elektrischen Energie in Wasserstoff umgesetzt werden. Die bei der elektrischen Trennung von Wasserstoff und Sauerstoff aus Wasser freiwerdende Wärme muss weggekühlt werden. Bei der anschließenden Verdichtung des Wasserstoffs auf den notwendigen Betriebsdruck entsteht ebenfalls Abwärme. Somit weist die Erzeugung von Wasserstoff insgesamt einen Wirkungsgrad unterhalb von 50 Prozent. Der Großteil der eingesetzten Energie wird somit in Wärme umgesetzt.

Die DE 10 2019 202 439 A1 beschreibt bereits ein Energiesystem mit einem Elektrolyseur zur Wasserelektrolyse und eine Wärmepumpe, mit welcher die Abwärme aus dem Elektrolyseur erhöht und einem Wärmenetz zur Verfügung gestellt werden kann. DE 20 2017 006617 U1 offenbart ebenfalls die Nutzung von Elektrolyse-Abwärme mit Wärmespeicher, der seriell zur Quelle geführt ist. EP 4 001 379 A1 beschreibt Lösungen zur Fernwärmeeinspeisung mit Puffer-/Speicheranordnungen. DE 10 2015 209 875 A1 zeigt Wärmepumpen-Systeme mit Netz-/Hydraulikverschaltungen und Speichern.

Allerdings bestehen bei der Verwendung von Abwärme aus der Wasserstoffproduktion mit einer Wärmepumpe mehrere Probleme: Zum einen altert der Elektrolyseur, sodass mit der Zeit der Wirkungsgrad sinkt und damit die erzeugte Abwärme steigt. Für einen Elektrolyseur mit 17 MW elektrischer Leistung würde die Abwärme von 5 MW über die Zeit auf 8,5 MW steigen. Folglich ist für einen neuen Elektrolyseur eine kleinere Wärmepumpe ausreichend, wohingegen für einen gealterten Elektrolyseur eine größere Wärmepumpe erforderlich wird. Weiterhin ist der wirtschaftliche Betrieb der Wasserstoffproduktion durch den Strompreis getrieben. Dies erfordert eine flexible Fahrweise des Elektrolyseurs bei gleichzeitig kontinuierlicher Forderung an Wasserstoff, Sauerstoff und Wärme, was eine komplexe Regelung und Fahrweisen der verschiedenen Komponenten (Elektrolyseur, Wärmepumpe, Wärmespeicher, Verdichter für Sauerstoff und Wasserstoff) erfordert. Des Weiteren besteht das Problem, dass bei der Kopplung von Elektrolyseur und Wärmepumpe zwei Komponenten mit unterschiedlichen Betriebsverhalten und Hochlaufkurven aufeinandertreffen. Ein Elektrolyseur reagiert als chemisch-elektrischer Prozess eher schnell auf Regeleingriffe, wohingegen eine Wärmepumpe mit einem Verdichter aufgrund ihrer Massenträgheit mit einer rotierenden Masse eher langsam auf Regeleingriffe reagieren. Wenn die EinzelKomponenten nicht entsprechend ihren An- und Abfahrkurven eingesetzt werden, kann es zu einem Totalausfall der Anlage kommen oder die dynamische Fahrweise nicht realisiert werden. Die dynamische Fahrweise muss die Strompreisschwankungen für den Betrieb der Anlagen sowie die Abnahmeschwankungen von Wasserstoff, Sauerstoff und Wärme berücksichtigen.

Der vorliegenden Erfindung liegt die Aufgabe zugrunde, die Wärmeausnutzung einer Wasserelektrolyse als Wärmequelle für eine Wärmepumpe zu verbessern und die genannten Probleme auszuräumen.

Die Aufgabe wird gelöst durch eine Vorrichtung mit den Merkmalen des unabhängigen Anspruchs 1 und durch ein Verfahren mit den Merkmalen des unabhängigen Anspruchs 5. In den abhängigen Ansprüchen sind vorteilhafte Ausgestaltungen und Weiterbildungen der Erfindung angegeben.

Die erfindungsgemäße Vorrichtung betrifft ein Energiesystem, umfassend eine Wasserstoff-Produktionseinheit mit wenigstens einem Elektrolyseur zur Wasserelektrolyse, der thermisch mit einem Kühlwasserkreislauf gekoppelt ist, eine Wärmepumpe, deren Wärmequellenseite thermisch mit dem Kühlwasserkreislauf gekoppelt ist, und deren Wärmesenkenseite über einen Wärmetauscher mit einem Fern- oder Nutzwärmekreislauf gekoppelt ist. Erfindungsgemäß ist in den Fern- oder Nutzwärmekreislauf ein Wärmespeicher geschaltet, dessen Rücklauf nach dem Wärmetauscher, und dessen Vorlauf vor dem Wärmetauscher der Wärmepumpe angeschlossen ist, sodass durch Wärme aus dem Wärmespeicher die Rücklauftemperatur des Fern- oder Nutzwärmekreislaufs anhebbar ist.

Das erfindungsgemäße Verfahren betriff den Betrieb eines Energiesystems, wobei mittels eines Elektrolyseurs durch Wasserelektrolyse Wasserstoff produziert wird, die bei der Wasserstoffproduktion anfallende Wärme an die Wärmequellen-seite einer Wärmepumpe übertragen wird, durch die Wärmepumpe das Temperaturniveau angehoben und an einen Fern- oder Nutzwärmekreislauf abgeführt wird. Erfindungsgemäß ist in den Fern- oder Nutzwärmekreislauf ein Wärmespeicher geschaltet ist, dessen Rücklauf nach dem Wärmetauscher, und dessen Vorlauf vor dem Wärmetauscher der Wärmepumpe angeschlossen ist, sodass durch Wärme aus dem Wärmespeicher die Rücklauftemperatur des Fern- oder Nutzwärmekreislaufs angehoben wird.

Die Erfindung geht zunächst von der Überlegung aus, dass sich die Wasserstoffelektrolyse durch den geringen Energienutzungsgrad, bzw. durch die hohe Menge an anfallender thermischer Energie einerseits, und die hohen Temperaturen von etwa 40°C andererseits vorteilhaft eignet, um diese thermische Energie in Fernwärmenetze bereitzustellen oder für industrielle Prozesse zu nutzen. Der Steigerung des COP der Wärmepumpe für die Abwärme der Elektrolyse von 40°C gegenüber der von sonst üblichem Flusswasser mit 10°C liegt für den Carnot Wirkungsgrad für ein Wärmenetz mit Vorlauftemperatur von 110°C bei 5,5 für die Abwärme des Elektrolyseurs und bei 3,8 für Abwärme aus Flusswasser. Durch die Wärmepumpe kann die Abwärme der Wasserstoff-Produktionseinheit auf das Temperaturniveau eines Fern- oder Nutzwärmekreislauf angehoben und somit nutzbar gemacht werden.

Die Erfindung erkennt zudem, dass es erforderlich ist, die schwankenden Mengen an erzeugter thermischer Energie an den kontinuierlichen Bedarf der Wärmepumpe anzupassen, sodass die Wärmepumpe in Volllast und damit bei einem optimalen Wirkungsgrad betrieben werden kann. Diese Anpassung wird überaschenderweise durch einen Wärmespeicher erzielt, dessen Rücklauf nach dem Wärmetauscher, und dessen Vorlauf vor dem Wärmetauscher der Wärmepumpe angeschlossen ist.

Durch die erfindungsgemäße Anordnung des Wärmespeichers ist es möglich, sowohl sich langsam verändernde Wärmemengen, wie sie durch die Alterung des Elektrolyseurs hervorgerufen werden, als auch sich schnell verändernde Wärmemengen wie sie durch unterschiedliches Betriebsverhalten und Hochlaufkurven von Elektrolyseur und Wärmepumpe hervorgerufen werden, auszugleichen. Durch die thermische Kopplung der Wasserstoff-Produktionseinheit mit der Wärmequellenseite der Wärmepumpe über den Kühlwasserkreislauf wird einerseits die Wasserstoff-Produktionseinheit direkt gekühlt und die Wärmeproduktion von der Wärmenutzung entkoppelt.

Die Wärmepumpe kann dadurch größer dimensioniert werden als durch die Wasserstoff-Produktionseinheit Abwärme anfällt, sodass die Wärmepumpe genügend Reserven hat, wenn die Abwärme altersbedingt ansteigt. Dieser Ausgleich kann durch eine Regelung erfolgen, die bei steigender Abwärme auf der Wärmequellenseite der Wärmepumpe den anteiligen Wärmestrom, der von dem Wärmespeicher in den Fern- oder Nutzwärmekreislauf abgegeben wird, entsprechend reduziert, sodass die Wärmepumpe weiterhin bei Volllast betrieben werden kann.

Durch die Erfindung kann die Abwärmenutzung der des Elektrolyseurs und der anderen Komponenten von 75% auf über 90% Energienutzungsgrad gesteigert werden. Gegenüber einer Anordnung ohne Wärmepumpe kann eine Kühlung des Elektrolyseurs über zusätzliche Kühler oder anderes Equipment eingespart werden.

In den Kühlwasserkreislauf können neben dem Elektrolyseur noch weitere Komponenten der Wasserstoff-Produktionseinheit geschaltet sein, deren Abwärme abgeführt und genutzt werden kann, wie beispielsweise ein Wasserstoffverdichter, ein Sauerstoffverdichter oder andere Wärmequellen der Einheit.

Um die Flexibilität bei der Auslegung der Wärmepumpenkapazität weiter zu erhöhen, ist bei einer vorteilhaften Weiterentwicklung der Erfindung zusätzlich ein Kältespeicher vorgesehen, welcher in den Kühlwasserkreislauf geschaltet ist. Dieser Kältespeicher ist zusätzlich zu einem möglicherweise vorhandenen Back-up- oder Überschuss-Kühler vorgesehen und unterstützt die direkte Kühlung der Wasserstoff-Produktionseinheit. Durch den Kältespeicher wird einerseits die Wasserstoff-Produktionseinheit direkt gekühlt und die Wärmeproduktion von der Wärmepumpe entkoppelt. Die Wärmepumpe kann dadurch kleiner dimensioniert werden als durch die Wasserstoff-Produktionseinheit Abwärme anfällt, oder ein altersbedingt Anstieg an Abwärme ausgeglichen werden.

Der Kältespeicher kann dabei Bestandteil der Regelung sein, in welcher Wärmespeicher und Kältespeicher beides Regelgrößen sind. Durch eine entsprechende Regelung kann somit bei einer reduzierten Abwärmemenge auf der Wärmequellenseite der Wärmepumpe der anteiligen Wärmestom, der aus dem Kältespeicher and die Wärmequelenseite der Wärmepumpe abgegeben wird, erhöht werden, sodass die Wärmepumpe weiterhin bei Volllast betrieben werden kann.

Je nach Größe des Kältespeichers kann die Abwärme auch nur durch Beladen des Kältespeichers erfolgen. Dies kann beispielsweise bei Inbetriebsetzung des Energiesystems oder Ausfall der Wärmepumpe vorteilhaft sein. Dazu ist bei einer vorteilhaften Weiterentwicklung der Erfindung der Vorlauf des Kältespeichers mit der Wärmequellenseite der Wärmepumpe verbunden, sodass durch die Wärmepumpe der Kältespeicher entladbar ist. Diese Fahrweise ist beispielsweise bei Ausfall der Wasserstoff-Produktionseinheit vorteilhaft, wenn keine Abwärme mehr anfällt. Durch diese Weiterentwicklung kann ein geschlossener Kreislauf zwischen Kältespeicher (14) und Wärme- pumpe (5) gebildet werden, was die Flexibilität im Betrieb der Anlage erhöht.

Die Erfindung eignet sich vorzugsweise für Hochtemperatur-Wärmepumpen. Hochtemperatur-Wärmepumpen kennzeichnen sich dadurch, dass sie Vorlauftemperaturen von über 100 bis hin zu 150 Grad Celsius erreichen.

Im Folgenden wird die Erfindung und die vorteilhaften Weiterentwicklungen anhand von Figuren näher beschrieben. Darin zeigt:
- FIG 1: Das erfindungsgemäße Energiesystem mit einem Wärmespeicher;
- FIG 2: eine Weiterentwicklung des erfindungsgemäßen Energiesystems mit einem Kältespeicher;
- FIG 3: eine Weiterentwicklung mit einer besonderen Verschaltung des Energiesystems zur Entladung des Kältespeichers.

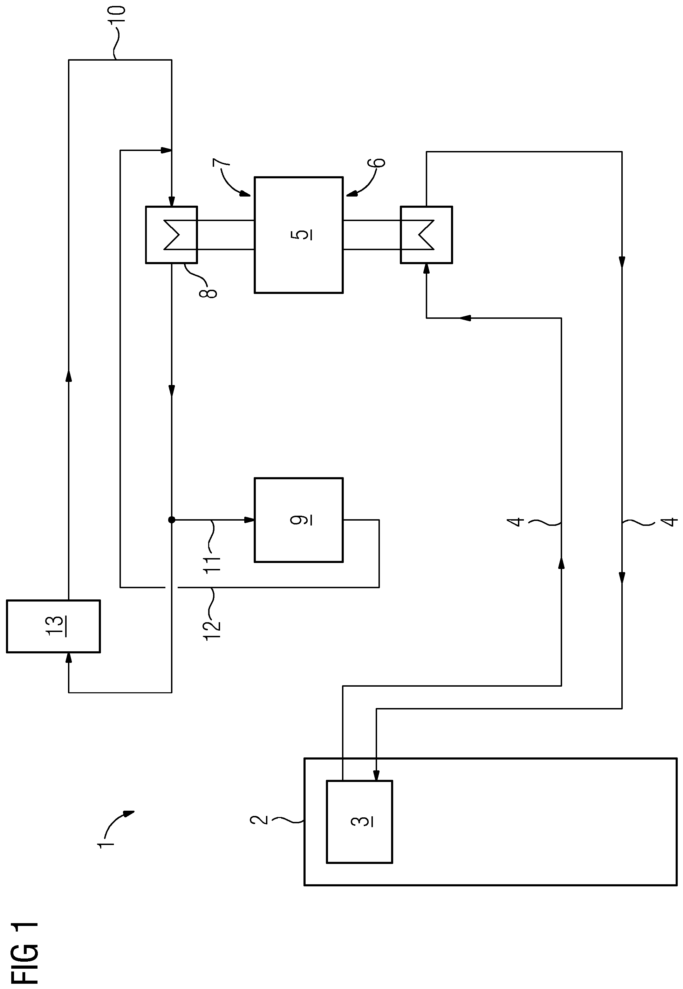

FIG 1 zeigt das erfindungsgemäße Energiesystem 1 mit einem Wärmespeicher 9 mit einem Vorlauf 12 und einem Rücklauf 11. Dargestellt ist zudem eine Wasserstoff-Produktionseinheit 2 mit wenigstens einem Elektrolyseur 3 zur Wasserelektrolyse, ein Kühlwasserkreislauf 4, eine Wärmepumpe 5 mit einer Wärmequellenseite 6 und einer Wärmesenkenseite 7, einen Wärmetauscher 8 und ein Fern- oder Nutzwärmekreislauf 10, der Bestandteil eines Fernwärmenetzes ist.

Durch den Elektrolyseur 3 wird durch Wasserelektrolyse Wasserstoff produziert. Bei einem Elektrolyseur mit 70 MW Leistung kann dies 15 MW Abwärme entsprechen. Diese Wärme wird über einen Kühlwasserkreislauf 4 an die Wärmequellenseite 6 der Wärmepumpe 5 übertragen. Die Wärmepumpe 5 kühlt die Wasserstoff-Produktionseinheit 2 somit direkt. Durch die Wärmepumpe 5 wird das Temperaturniveau der Wärme angehoben und über einen Wärmetauscher 8 an den Fern- oder Nutzwärmekreislauf 10 abgeführt. Die Erfindung kennzeichnet, dass in den Fern- oder Nutzwärmekreislauf 10 der Wärmespeicher 9 geschaltet ist, dessen Rücklauf 11 nach dem Wärmetauscher 8, und dessen Vorlauf 12 vor dem Wärmetauscher 8 der Wärmepumpe 5 angeschlossen ist. Dadurch kann durch Wärme aus dem Wärmespeicher 9 die Rücklauftemperatur des Fern- oder Nutzwärmekreislaufs 10 angehoben werden.

Bei dieser Konfiguration ist bei Inbetriebsetzung des Elektrolyseurs 3 die Wärmepumpenkapazität größer als die anfallende Abwärme. Die Wärmepumpe 5 ist somit überdimensioniert. Die Wärmepumpe kann dennoch in Volllast und damit bei einem optimalen Wirkungsgrad betrieben werden, da durch den Wärmespeicher 9 die Temperaturdifferenz ausgeglichen wird. Die über die Zeit erforderliche Anpassung an die Alterung des Elektrolyseurs 3 wird über eine Regelung entsprechend ausgeglichen. Bei der Regelung wird bei steigender Abwärmemenge auf der Wärmequellenseite 6 der Wärmepumpe 5 der anteilige Wärmestrom, der von dem Wärmespeicher 9 in das Fern- oder Nutzwärmekreislauf abgegebeben wird, entsprechend reduziert.

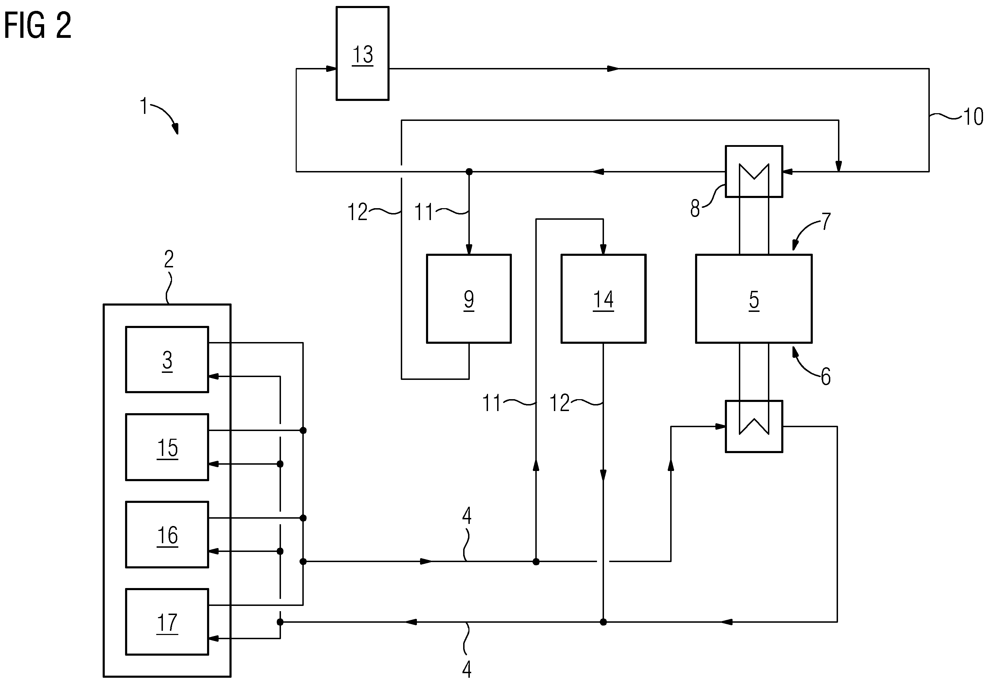

FIG 2 zeigt eine Weiterentwicklung der Erfindung mit einem zusätzlichen Kältespeicher 14., welcher in den Kühlwasserkreislauf geschaltet ist. In FIG 2 ist zudem dargestellt, dass die Wasserstoff-Produktionseinheit 2 neben dem Elektrolyseur 3 noch weitere Komponenten umfassen kann, wie beispielsweise eine Wasserstoff-Verdichtereinheit 15, eine Sauerstoff-Verdichtereinheit 16, sowie andere Abwärmequellen. Der Kältespeicher 14 ist in den Kühlwasserkreislauf 4 geschaltet. Durch den Kältespeicher 14 kann die Flexibilität bei der Auslegung der Wärmepumpenkapazität weiter erhöht werden. Durch den Kältespeicher 14 wird einerseits die Wasserstoff-Produktionseinheit 2 direkt gekühlt und die Wärmeproduktion von der Wärmepumpe 5 entkoppelt.

Bei dieser Konfiguration ist bei Inbetriebsetzung des Elektrolyseurs 3 die Wärmepumpenkapazität kleiner oder gleich als die der anfallenden Abwärme. Die Wärmepumpe 5 ist somit schon zu Beginn oder nach der Alterung des Elektrolyseurs 3 unterdimensioniert. Die Wärmepumpe 5 kann dadurch kleiner dimensioniert werden. Die Wärmepumpe kann dennoch in Volllast und damit bei einem optimalen Wirkungsgrad betrieben werden, da durch den Kältespeicher 14 die Temperaturdifferenz ausgeglichen wird. Die über die Zeit erforderliche Anpassung an die Alterung des Elektrolyseurs 3 wird entsprechend geregelt.

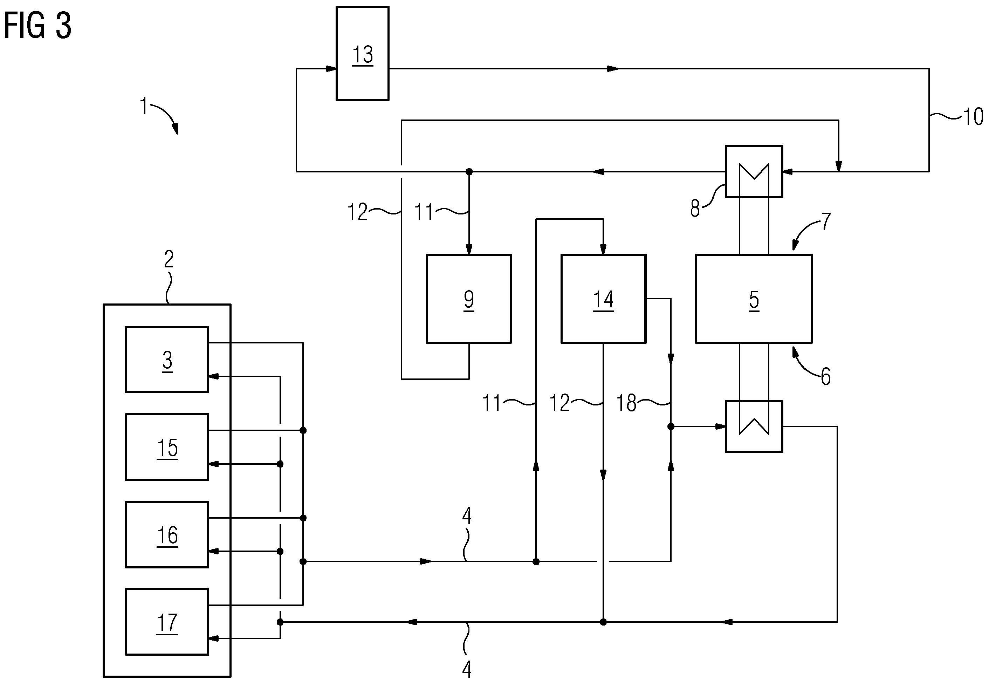

FIG 3 zeigt eine Weiterentwicklung mit einer besonderen Verschaltung des Energiesystems 1 zur Entladung des Kältespeichers 14. Der Vorlauf 12 des Kältespeichers 14 ist über eine Abzweigleitung 18 mit der Wärmequellenseite 6 der Wärmepumpe 5 verbunden. Dadurch kann durch die Wärmepumpe der Kältespeicher entladen werden. Durch diese Weiterentwicklung kann ein geschlossener Kreislauf zwischen Kältespeicher 14 und Wärmepumpe 5 gebildet werden. Dies kann beispielsweise bei Inbetriebsetzung des Energiesystems 1 oder Ausfall der Wasserstoff-Produktionseinheit 2 vorteilhaft sein.

## Patentansprüche

1. Energiesystem (1), umfassend
- eine Wasserstoff-Produktionseinheit (2) mit wenigstens einem Elektrolyseur (3) zur Wasserelektrolyse;
- einen Kühlwasserkreislauf (4), mit dem der Elektrolyseur (3) thermisch gekoppelt ist;
- eine Wärmepumpe (5), mit einer Wärmequellenseite (6) und einer Wärmesenkenseite (7), wobei die Wärmequellenseite (6) mit dem Kühlwasserkreislauf (4) thermisch gekoppelt ist;
- einen Wärmetauscher (8), der mit der Wärmesenkenseite (7) der Wärmepumpe (5) thermisch gekoppelt ist;
- einen Fern- oder Nutzwärmekreislauf (10), der mittels des Wärmetauschers (8) mit der Wärmesenkenseite (7) der Wärmepumpe (5) thermisch gekoppelt ist;
**dadurch gekennzeichnet, dass** weiterhin Wärmespeicher (9) umfasst ist, der in den Fern- oder Nutzwärmekreislauf (10) geschaltet ist, dessen Rücklauf (11) nach dem Wärmetauscher (8), und dessen Vorlauf (12) vor dem Wärmetauscher (8) der Wärmepumpe (5) angeschlossen ist, sodass durch Wärme aus dem Wärmespeicher (9) die Rücklauftemperatur des Fern- oder Nutzwärmekreislaufs (10) anhebbar ist.

2. Energiesystem (1) nach Anspruch 1, **dadurch gekennzeichnet, dass** weiterhin ein Kältespeicher (14) in den Kühlwasserkreislauf (4) geschaltet ist.

3. Energiesystem (1) nach Anspruch 2, **dadurch gekennzeichnet, dass** der Vorlauf (12) des Kältespeichers (14) mit der Wärmequellenseite (6) der Wärmepumpe (5) verbunden ist, sodass durch die Wärmepumpe (5) der Kältespeicher (14) entladbar ist.

4. Energiesystem (1) nach einem der Ansprüche 1 bis 3, **dadurch gekennzeichnet, dass** die Wärmepumpe (5) eine Hochtemperaturwärmepumpe ist.

5. Verfahren zum Betrieb eines Energiesystems (1), wobei mittels eines Elektrolyseurs (2) durch Wasserelektrolyse Wasserstoff produziert wird, die bei der Wasserstoffproduktion anfallende Wärme über einen Kühlwasserkreislauf (4) an die Wärmequellenseite (7) einer Wärmepumpe (5) übertragen wird, durch die Wärmepumpe (5) das Temperaturniveau angehoben und über einen Wärmetauscher (8) an einen Fern- oder Nutzwärmekreislauf (10) abgeführt wird,
**dadurch gekennzeichnet, dass** in den Fern- oder Nutzwärmekreislauf (10) ein Wärmespeicher (9) geschaltet ist, dessen Rücklauf (11) nach dem Wärmetauscher (8), und dessen Vorlauf vor dem Wärmetauscher (8) der Wärmepumpe (5) angeschlossen ist, sodass durch Wärme aus dem Wärmespeicher (9) die Rücklauftemperatur des Fern- oder Nutzwärmekreislaufs (10) angehoben wird.

6. Verfahren zum Betrieb eines Energiesystems (1) nach Anspruch 5, **dadurch gekennzeichnet, dass** weiterhin ein Kältespeicher (14) in den Kühlwasserkreislauf geschaltet ist.

7. Verfahren zum Betrieb eines Energiesystems (1) nach Anspruch 6, **dadurch gekennzeichnet, dass** der Vorlauf (12) des Kältespeichers (14) mit der Wärmequellenseite (6) der Wärmepumpe (5) verbunden ist, sodass durch die Wärmepumpe (5) der Kältespeicher (14) entladen werden kann.

8. Verfahren zum Betrieb eines Energiesystem (1) nach einem der Ansprüche 5 bis 7, **dadurch gekennzeichnet, dass** die Wärmepumpe (5) eine Hochtemperaturwärmepumpe ist.

## Claims

1. An energy system (1) comprising
- a hydrogen production unit (2) having at least one electrolyser (3) for water electrolysis;
- a cooling water circuit (4) to which the electrolyser (3) is thermally coupled;
- a heat pump (5) having a heat source side (6) and a heat sink side (7), wherein the heat source side (6) is thermally coupled to the cooling water circuit (4);
- a heat exchanger (8) which is thermally coupled to the heat sink side (7) of the heat pump (5);
- a district or useful heat circuit (10) which is thermally coupled to the heat sink side (7) of the heat pump (5) through the heat exchanger (8);
**characterised by** further comprising heat accumulator (9) connected to the district or useful heat circuit (10), whose return (11) is connected downstream of the heat exchanger (8) and whose feed (12) is connected upstream of the heat exchanger (8) of the heat pump (5), so that the return temperature of the district or useful heat circuit (10) is raisable by heat from the heat accumulator (9).

2. The energy system (1) according to claim 1, **characterised in that** furthermore a cold accumulator (14) is connected to the cooling water circuit (4).

3. The energy system (1) according to claim 2, **characterised in that** the feed (12) of the cold accumulator (14) is connected to the heat source side (6) of the heat pump (5), so that the cold accumulator (14) is dischargeable by the heat pump (5).

4. The heat energy system (1) according to claims 1 to 3, **characterised in that** the heat pump (5) is a high-temperature heat pump.

5. A method for operating an energy system (1), wherein, through an electrolyser (2), hydrogen is produced by water electrolysis, the heat arising during hydrogen production is transferred, via a cooling water circuit (4), to the heat source side (7) of a heat pump (5), the temperature level is raised by the heat pump (5) and discharged, via a heat exchanger (8), to a district or useful heat circuit (10), **characterised in that** a heat accumulator (9) is connected to the district or useful heat circuit (10), whose return (11) is connected downstream of the heat exchanger (8) and whose feed is connected upstream of the heat exchanger (8) of the heat pump (5), so that the return temperature of the district or useful heat circuit (10) is raised by heat from the heat accumulator (9).

6. A method for operating an energy system (1) according to claim 5, **characterised in that** furthermore a cold accumulator (14) is connected to the cooling water circuit.

7. The method for operating an energy system (1) according to claim 6, **characterised in that** the feed (12) of the cold accumulator (14) is connected to the heat source side (6) of the heat pump (5), so that the cold accumulator (14) can be discharged by the heat pump (5).

8. The method for operating an energy system (1) according to any of claims 5 to 7, **characterised in that** the heat pump (5) is a high-temperature heat pump.

## Revendications

1. Système énergétique (1), comprenant
- une unité de production d'hydrogène (2) ayant au moins un électrolyseur (3) pour l'électrolyse de l'eau ;
- un circuit d'eau de refroidissement (4), auquel l'électrolyseur (3) est thermiquement couplé ;
- une pompe à chaleur (5), avec un côté source de chaleur (6) et un côté puits de chaleur (7), dans lequel le côté source de chaleur (6) est thermiquement couplé au circuit d'eau de refroidissement (4) ;
- un échangeur de chaleur (8), qui est thermiquement couplé au côté puits de chaleur (7) de la pompe à chaleur (5) ;
- un circuit de chauffage urbain ou de chaleur utile (10), qui est thermiquement couplé au côté puits de chaleur (7) de la pompe à chaleur (5) au moyen de l'échangeur de chaleur (8) ;
**caractérisé en ce qu'**un accumulateur de chaleur (9) est en outre compris, lequel est monté dans le circuit de chauffage urbain ou de chaleur utile (10), dont le retour (11) est raccordé après l'échangeur de chaleur (8), et dont le départ (12) est raccordé avant l'échangeur de chaleur (8) de la pompe à chaleur (5), de sorte que la température de retour du circuit de chauffage urbain ou de chaleur utile (10) peut être élevée par la chaleur provenant de l'accumulateur de chaleur (9).

2. Système énergétique (1) selon la revendication 1, **caractérisé en ce qu'**un accumulateur de froid (14) est en outre monté dans le circuit d'eau de refroidissement (4).

3. Système énergétique (1) selon la revendication 2, **caractérisé en ce que** le départ (12) de l'accumulateur de froid (14) est relié au côté source de chaleur (6) de la pompe à chaleur (5), de sorte que l'accumulateur de froid (14) peut être déchargé par la pompe à chaleur (5).

4. Système énergétique (1) selon l'une quelconque des revendications 1 à 3, **caractérisé en ce que** la pompe à chaleur (5) est une pompe à chaleur à haute température.

5. Procédé de fonctionnement d'un système énergétique (1), dans lequel de l'hydrogène est produit au moyen d'un électrolyseur (2) par électrolyse de l'eau, la chaleur générée lors de la production d'hydrogène est transférée au côté source de chaleur (7) d'une pompe à chaleur (5) par l'intermédiaire d'un circuit d'eau de refroidissement (4), le niveau de température est élevé par la pompe à chaleur (5) et évacué vers un circuit de chauffage urbain ou de chaleur utile (10) par l'intermédiaire d'un échangeur de chaleur (8), **caractérisé en ce qu'**un accumulateur de chaleur (9) est monté dans le circuit de chauffage urbain ou de chaleur utile (10), dont le retour (11) est raccordé après l'échangeur de chaleur (8), et dont le départ est raccordé avant l'échangeur de chaleur (8) de la pompe à chaleur (5), de sorte que la température de retour du circuit de chauffage urbain ou de chaleur utile (10) est élevée par la chaleur provenant de l'accumulateur de chaleur (9).

6. Procédé de fonctionnement d'un système énergétique (1) selon la revendication 5, **caractérisé en ce qu'**un accumulateur de froid (14) est en outre monté dans le circuit d'eau de refroidissement.

7. Procédé de fonctionnement d'un système énergétique (1) selon la revendication 6, **caractérisé en ce que** le départ (12) de l'accumulateur de froid (14) est relié au côté source de chaleur (6) de la pompe à chaleur (5), de sorte que l'accumulateur de froid (14) peut être déchargé par la pompe à chaleur (5).

8. Procédé de fonctionnement d'un système énergétique (1) selon l'une quelconque des revendications 5 à 7, **caractérisé en ce que** la pompe à chaleur (5) est une pompe à chaleur à haute température.
